# EUROPEAN PATENT APPLICATION

(11) **EP 1 098 263 A2**
(43) Date of publication of application: **09.05.2001**
(21) Application number: 00309738.3
(22) Date of filing: 03.11.2000
(51) Int. Cl.: G06F 17/60

(54) **Electronic commerce method, client computer for electronic commerce, and medium recording program thereof**

(30) Priority: 05.11.1999 JP 31613499
(71) Applicant: Kizna.com Inc., Delaware 19801 (US)
(72) Inventor: Miyazawa, Takeo, Minato-ku, Tokyo 106-0046 (JP)
(74) Representative: Brown, Kenneth Richard

(57) **Abstract**

The present invention provides an electronic commerce system having an interface which the user can use easily. In the electronic commerce method comprising steps of accessing a server to obtain commodity information, selecting a commodity based on the obtained commodity information, sending the information on the selected commodity to the server, and confirming accounting data from the server, wherein the above mentioned step of selecting a commodity further comprises steps of generating a commodity catalog screen to display the commodity information from the server, generating a shopping basket screen which is independent from the commodity catalog screen and maintains the shopping status even if the commodity catalog screen is replaced with another commodity catalog screen, copying or moving the commodity icon displayed on the commodity catalog screen to the shopping basket screen, reading attributes information of the commodity icon copied or moved to the shopping basket screen, tabulating the attributes information of the commodity icons existing on the shopping basket screen, and sending the tabulated attributes information to the server.

## Description

### BACKGROUND OF THE INVENTION

### 1. Field of the Invention

The present invention relates to an electronic commerce method for conducting electronic commerce via communication lines such as the Internet, a client computer for electronic commerce, and a medium recording program thereof, and more particularly to all the above with an improved user interface.

### 2. Description of the Related Art

Electronic commerce using a computer and communication lines will be popular in the future. Even now, commodities can be purchased by accessing the home page of a shop using the Internet. Payment is by credit card or a funds transfer from a bank account.

In conventional electronic commerce, a desired commodity is selected on the screen, the total price is confirmed, and purchase is executed. When a plurality of commodities are selected, the customer must move from the commodity screen to the purchase screen, then return to the commodity screen and move back to the purchase screen again. This takes time to switch between screens. A conventional electronic commerce system does not have a user interfacewhich can be operated intuitively and easily, such as a drag and drop operation.

To solve this problem, it is an object of the present invention to provide an electronic commerce method having an interface which the user can use easily, a client computer for electronic commerce, and a medium recording the program thereof.

### SUMMARY OF THE INVENTION

The present invention is an electronic commerce method comprising steps of accessing a server to obtain commodity information, selecting a commodity based on the obtained commodity information, sending information on the selected commodity to the server, and confirming accounting data from the server, wherein the above mentioned step of selecting a commodity further comprises steps of, generating a commodity catalog screen for displaying the commodity information from the server, generating a shopping basket screen which is independent from the commodity catalog screen and maintaining the shopping status even if the commodity catalog screen is replaced with another commodity catalog screen, copying or moving the commodity icon displayed on the commodity catalog screen to the shopping basket screen, reading the attributes information on the commodity icon copied or moved to the shopping basket screen, tabulating the attributes information on the commodity icons existing on the shopping basket screen, and transferring the tabulated attributes information to the step of sending information on the selected commodity to the server.

The present invention is a client computer for electronic commercewhich accesses a server to obtain commodity information, selects a commodity based on the obtained commodity information, and sends the information on the selected commodity to the server, comprising: a commodity catalog screen generation portion which generates a commodity catalog screen for displaying the commodity information from the server; a commodity icon display portion which generates a commodity icon based on the commodity information from the server and displays the commodity icon on the catalog screen; a shopping basket screen generation portion which operations independently from the commodity catalog screen and generates a shopping basket screen which maintains the shopping status even if the commodity catalog screen is replaced with another commodity catalog screen; and an accounting processing portion which reads the attributes information on the commodity icon copied or moved to the shopping basket screen and tabulates the attributes information on the commodity icons existing on the shopping basket screen, wherein shopping can be executed by a drag and drop operation of the icons.

The present invention is a client computer for electronic commerce which accesses a server to obtain commodity information, selects a commodity based on the obtained commodity information, and sends the information on the selected commodity to the server, comprising: a commodity catalog screen generation portion which generates a commodity catalog screen for displaying commodity information from the server; a commodity shelf display portion which partitions the commodity catalog screen to define a plurality of areas, defines the attributes information on commodities in the area based on the commodity information from the server for each one of the areas, and displays the commodity information; a shopping basket screen generation portion which operates independently from the commodity catalog screen and generates a shopping basket screen which maintains the shopping status even if the commodity catalog screen is replaced with another commodity catalog screen; a commodity specification portion which specifies a commodity by a cursor which is moved to the area and displays the specified commodity on the shopping basket screen; and an accounting processing portion which reads the attributes information on the commodity displayed on the shopping basket screen, and tabulates the attributes information of commodities existing on the shopping basket screen, wherein shopping can be executed by clicking in that area.

The present invention is a medium recording a program which generates a commodity catalog screen on a computer for displaying commodity information from a server, generates commodity icons based on the commodity information from the server, displays the commodity icons on the catalog screen, generates a shopping basket screen which operates independently from the commodity catalog screen and maintains the shopping status even if the commodity catalog screen is replaced with another commodity catalog screen, reads the attributes information on a commodity icon copied or moved to the shopping basket screen, tabulates the attributes information on the commodity icons existing on the shopping basket screen, and executes shopping by a drag and drop operation of the icons.

The present invention is a medium recording a program which generates a commodity catalog screen on a computer for displaying commodity information from a server, partitions the commodity catalog screen to define a plurality of areas, defines the attributes information on commodities in the area based on the commodity information from the server for each one of the areas, displays the commodity information, generates a shopping basket screen which operates independently from the commodity catalog screen and maintains the shopping status even if the commodity catalog screen is replaced with another commodity catalog screen, specifies a commodity by a cursor which is moved to the area, displays the specified commodity on the shopping basket screen, reads the attributes information on the commodity displayed on the shopping basket screen, tabulates the attributes information on commodities existing on the shopping basket screen, and executes shopping by clicking on the area.

Medium includes, for example, a floppy disk, a hard disk, a magnetic tape, a magneto optical disk, a CD-ROM, a DVD, a ROM cartridge, a RAM memory cartridge with a backup battery, a flash memory cartridge and a non-volatile RAM cartridge.

Medium also includes such wire communication medium as telephone lines, and such wireless communication medium as microwave lines. Internet is also included in the communication medium mentioned here.

Medium is a material substance where information (mainly digital data, programs) have been recorded by some physical means, so that such a processing device as a dedicated processor can execute predetermined functions. A medium is for downloading programs to a computer and having the computer execute predetermined functions by some means.

### BRIEF DESCRIPTION OF THE DRAWINGS

Fig. 1 is a diagram depicting the flow of a transaction of an electronic commerce system of the embodiment 1;
Fig. 2 is a conceptual diagram depicting the general system of the embodiment 1;
Fig. 3 is a diagram depicting the configuration of a client of the embodiment 1;
Fig. 4 is a diagram depicting the configuration of a server of the embodiment 1;
Fig. 5 is an example of a screen to be displayed on a client of the embodiment 1;
Fig. 6 is a diagram depicting the internal configuration of a commodity icon of the embodiment 1;
Fig. 7 is an example of a screen to be displayed on a server of the embodiment 1;
Fig. 8 is a flow chart depicting the operation of the electronic commerce system of the embodiment 1;
Fig. 9 is an example of a screen to be displayed on the client of the embodiment 2;
Fig. 10 is an example of a screen to be displayed on a client of the embodiment 3;
Fig. 11 is a diagram depicting the internal configuration of a commodity area of the embodiment 3; and

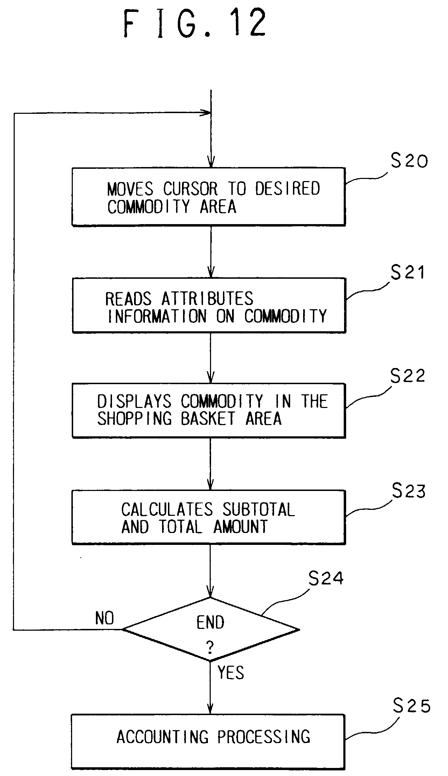

Fig. 12 is a flow chart depicting the operation of the electronic commerce system of the embodiment 3.

### DESCRIPTION OF THE PREFERRED EMBODIMENTS

### Embodiment 1

Embodiment 1 of the present invention will now be described with reference to the accompanying drawings.

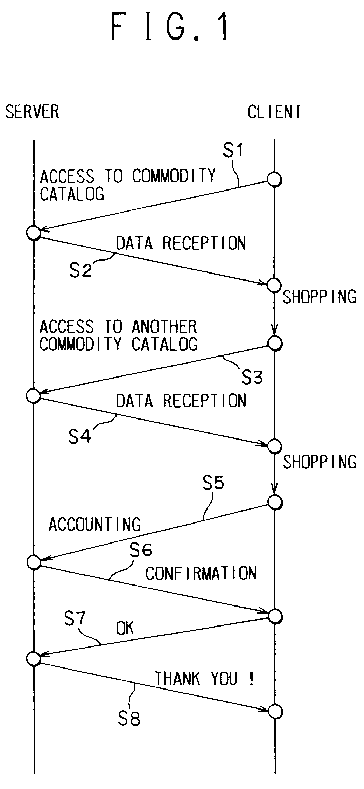

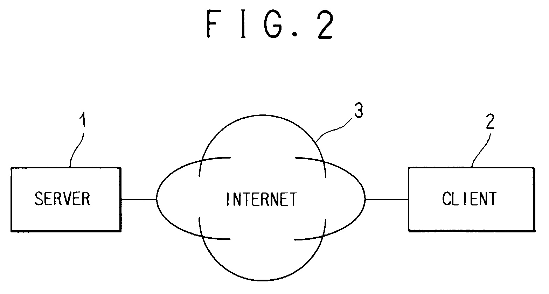

Fig. 1 is a diagram depicting the flow of the transaction of the electronic commerce system of the embodiment 1. Fig. 2 is a conceptual diagram depicting the general system of the embodiment 1. Users start up the browser software of their personal computer and access the home page where a desired commodity is being sold. An access request to the page of the commodity catalog is sent from the client machine to the server ( S1). The server prepares the commodity catalog in advance such that the commodity catalog can be read by the browser software. The commodity catalog is divided into a plurality of pages depending on the type thereof. The client can access any one or more pages. The client receives data on the commodity catalog from the server (S2). The user shops while viewing the commodity catalog. The procedure of the processing which the client will execute for shopping will be described later. When the user desires another commodity catalog, the client sends an access request for the page of another commodity catalog to the server ( S3). The client receives the data on the other commodity catalog from the server (S4), and the user shops while viewing the commodity catalog. When shopping is over, the client requests accounting processing to the server (S5). The server notifies the content of accounting to the client and requests confirmation (S6). If "OK" (S7), the server executes termination processing (S8).

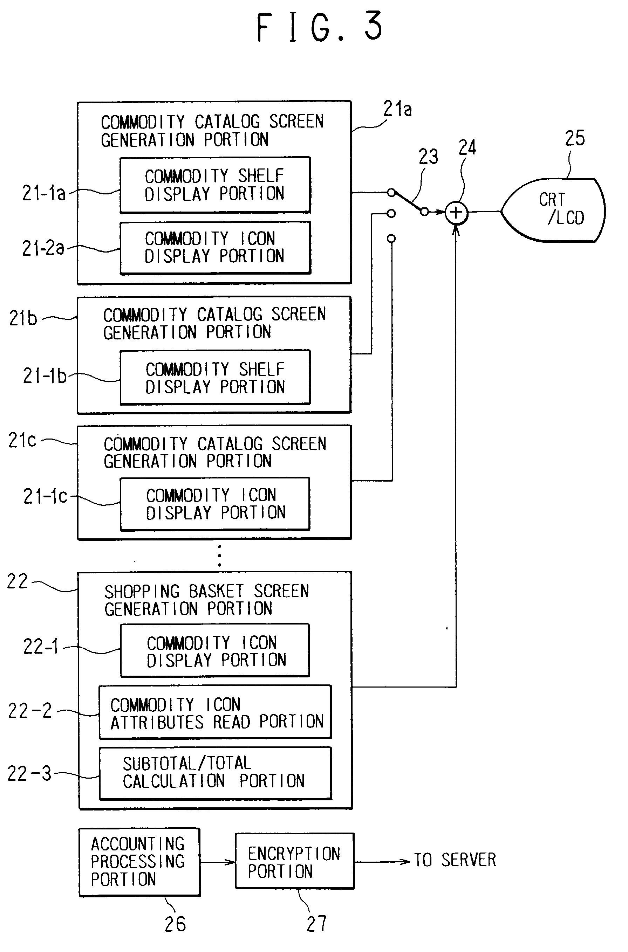

Fig. 3 is a diagram depicting the configuration of the client of the embodiment 1. Since the client is usually a personal computer, a program for operating the personal computer as the client for this electronic commerce system is downloaded to the personal computer, or the program stored on a CD-ROM or other format is installed on the personal computer to implement the system in Fig. 3. Fig. 3 shows the status after processing S2 and S4 in Fig. 1, for example, are executed.

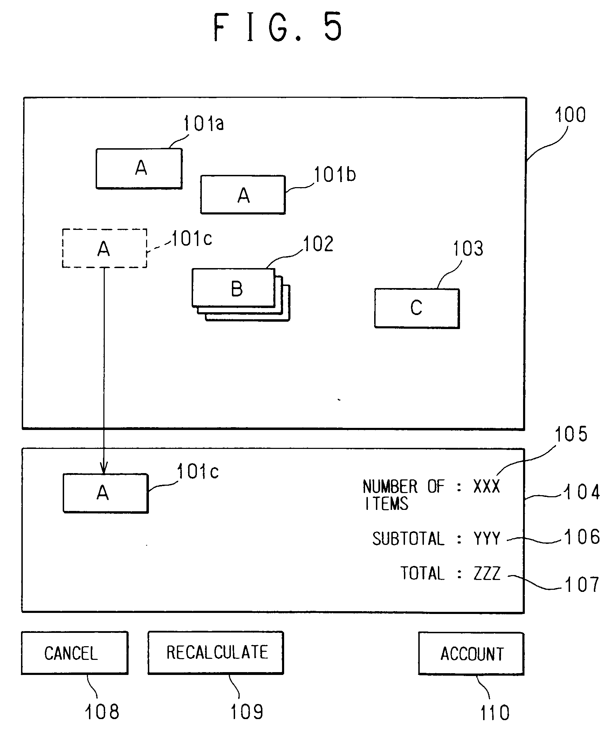

The commodity catalog screen generation portions 21a - 21c display different commodity catalogs. Fig. 5, Fig. 9 and Fig. 10 show these examples. A client can display one or more (three in the example in Fig. 3) commodity catalogs, but normally one of these is displayed. The switch 23 is used for this switching. This is because the size of the screen is limited, and the number of types of commodities which can be displayed together is also limited. If all commodities can be displayed at the same time, there may be only one commodity catalog screen generation portion 21.

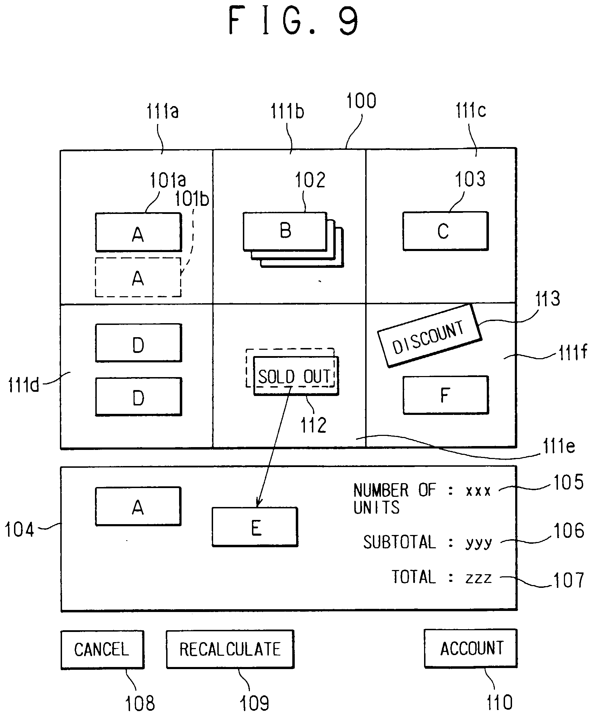

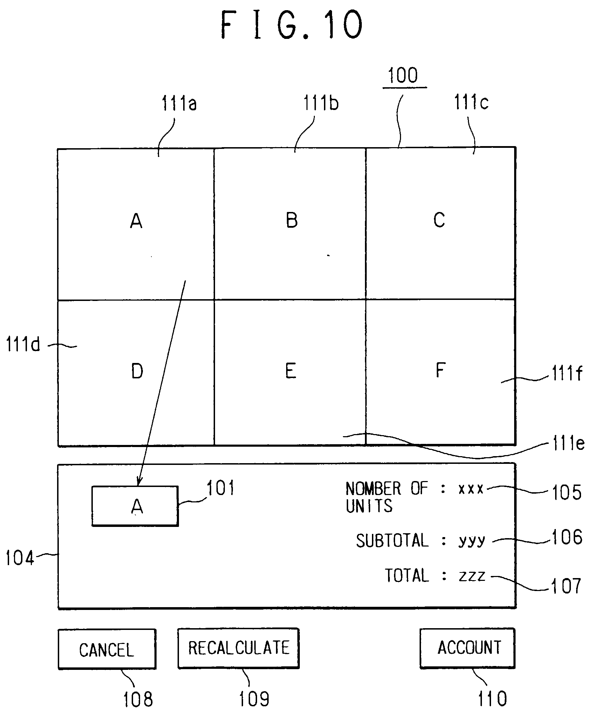

The commodity catalog screen generation portions 21a - 21c have a commodity shelf display portion 21-1 and/or a commodity icon display portion 21-2 respectively. The commodity display portion 21-1 partitions the screen into a plurality of areas with each one of these areas corresponding to a commodity. Each area contains attributes information, such as the image (icon) of the commodity, description and price. A portion or all of the attributes information is displayed on the screen. The user can specify a commodity by specifying the area. Fig. 9 and Fig. 10 show examples. The commodity icon display portion 21-2 displays an icon to indicate a commodity on the screen. The commodity icon contains attributes information, such as an image (icon) of the commodity, description and price. The user can specify a commodity by a drag and drop operation of the icon. Fig. 5 shows an example.

The shopping basket screen generation portion 22 displays information on the commodities the user purchased and the total price. The shopping basket screen is independent from the commodity catalog screen, and remains on the screen even if the commodity catalog is switched. Therefore, the user can immediately confirm the status of shopping by viewing the shopping basket screen. Since the shopping basket screen is independent from the commodity catalog screen, shopping can be executed by a drag and drop operation of the icon. The commodity icon display portion 22-1 displays the icon of the purchased commodity on the shopping basket screen. The commodity icon attributes display portion 22-2 reads the attributes information on the commodity icon on the shopping basket screen. A subtotal/total calculation portion 22-3 calculates the subtotal/total of the commodities of the commodity icons on the shopping basket screen.

A synthesis means 24 synthesizes the commodity catalog screen selected by the switch 23 and the shopping basket screen, and displays the result on the display portion 25. An accounting processing portion 26 performs accounting processing when the user has finished shopping. An encryption portion 27 encrypts the data so that other individuals cannot read personal information such as a credit card number. The encrypted data is sent to the server.

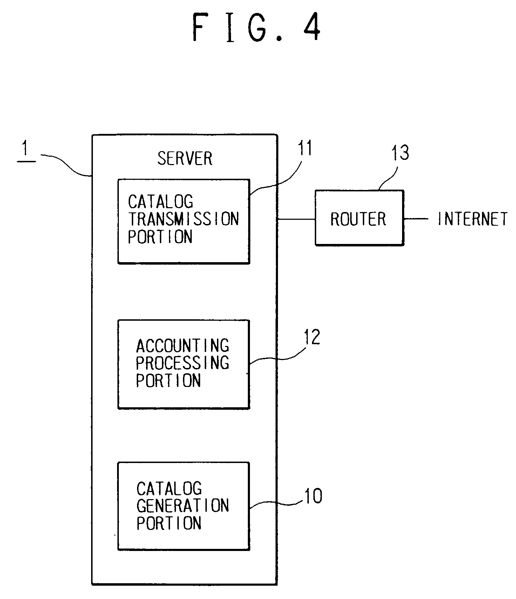

Fig. 4 is a diagram depicting the configuration of the server of the embodiment 1. The catalog generation portion 10 generates data for the commodity catalog. For example, the catalog generation portion 10 generates a commodity icon for each commodity, and adds such attributes information as commodity name, price, number of products to be sold (stock), period of validity, and bargains. The catalog transmission portion 11 sends the generated catalog data to the client 2 via the router 13. The accounting processing portion 12 performs predetermined accounting processing when the client 2 requests accounting processing.

Fig. 5 is an example of a screen to be displayed on the client of the embodiment 1. The commodity catalog screen 100 and the shopping basket screen 101 are displayed on the display portion 25. Icons 101 - 103 of various commodities are displayed on the commodity catalog screen 100. The layout of icons is arbitrary. The icons may be laid out separate from each other, as in 101a - 101c, or the required number of icons may be overlapped, as in 102. For example, the commodity icons are laid out corresponding to the number of products in stock.

If the commodity icons can only be moved but not copied to the shopping basket screen, which indicates that icons have run out, the commodity is sold out, and therefore can no longer be purchased. In this way, it is possible to limit purchase by the number of icons. In the same way, the number of items one individual can purchase can be limited. If the commodity icons can be copied, there is no purchase limitation. As a consequence, the commodity icon can set either "copy possible" or "move only", and in the latter case, the number of commodities to be purchased can be easily set by setting the number of commodity icons. This method is very convenient, since the number of commodities which can be purchased and the price can be set for each user. For example, for regular customers, the minimum number of commodities which can be purchased is set high so that many commodities can be provided at a low price, and for general customers, the minimum number of commodities which can be purchased is set low (e.g. 1), and the unit price of the commodity can be set to a high price. In other words, by representing a commodity with an icon and adding attributes information to the icon, the above mentioned flexible handling becomes possible. This system provides an easy to use interface to users and can provide a convenient sales system for the seller.

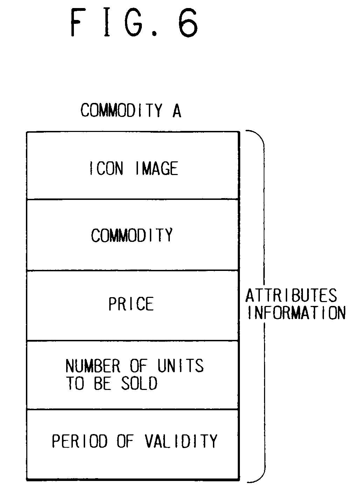

Each icon has the internal configuration shown in Fig. 6. When an icon is copied or moved, the attributes information is also moved. On the shopping basket screen 101, an area to place commodity icons, and an area to display the number of items 105 of the commodity icons on the shopping basket screen 101, the subtotal 106 and the total 107 with the price of the other selected commodities are fined. When a commodity icon is placed on the shopping basket screen 101, the client machine detects this and reads the attributes information of the commodity icon. By copying or moving by dragging and dropping the commodity icon to the area of the shopping basket screen 101, the commodity can be purchased. In this way, this system makes the operation to shop for commodities easier.

On the display portion 25, a cancel button 108, a recalculate button 109 and an account button 110 are also displayed. The cancel button 108 is for canceling a purchased commodity, that is, for canceling a commodity icon placed on the shopping basket screen 101. A commodity icon to be canceled is selected by clicking on it, and then pressing the cancel button 108. Or the cancel button (icon) 108 may be dragged and dropped onto the commodity icon, or the commodity icon may be dragged and dropped onto the cancel button 108. After using the cancel button 108, the number of items, the subtotal and the total can be set to values after cancellation by pressing the recalculate button 109. The number of items, the subtotal and the total can be automatically recalculated when a commodity icon is dragged and dropped, but it is preferable to press the recalculate button 109 to guarantee the operation. When shopping is finished, the account button 110 is pressed. Then the information on shopping, that is, information on the commodity icons on the shopping basket screen 101, is sent to the server.

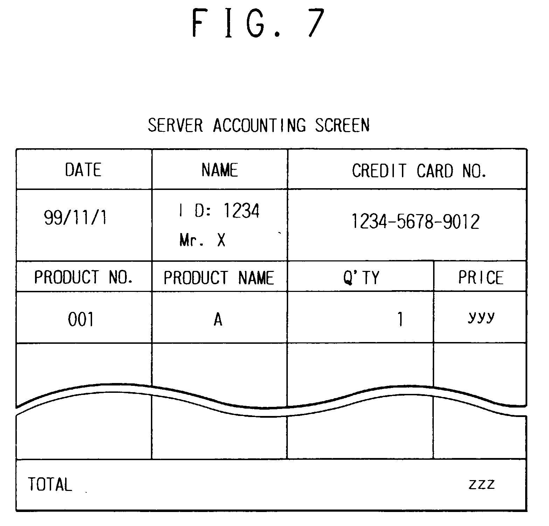

Fig. 7 is an example of a screen to be displayed on the server of the embodiment 1. The screen in Fig. 7 is displayed when information on shopping is sent to the server. The date, user name, credit card number, list of commodities, total amount, and other information are displayed on this screen. After confirming that there are no errors in the user and commodities information, this accounting information is sent to the client 2.

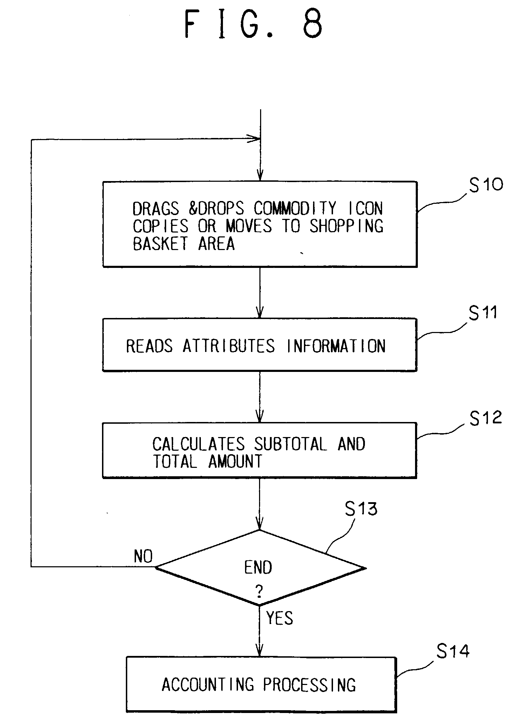

Fig. 8 is a flow chart depicting the operation of the electronic commerce system of the embodiment 1. Based on this flow chart, processing on shopping will be described.

When the screen in Fig. 5 is displayed, the user copies or moves the desired commodity icon to the shopping basket area by a drag and drop operation (S10). Then the attributes information of the added commodity icon is read (S11). Based on the attributes information which was read, the subtotal and the total amount are calculated (S12). When shopping is finished (when account button 110 is pressed), accounting processing is executed (S14). Otherwise, (processing) returns to the first step. Accounting processing includes prohibiting the movement of commodity icons in order to determine the commodities, calculating the number of items, the subtotal and the total, and sending this determined information to the server.

According to the system of this embodiment, a commodity is represented by an icon, so the user can operate easily by a drag and drop operation, and the stock and the price of the commodity can be freely set by adding attributes information to the commodity icon. In other words, this system can provide an interface which the user can easily use, and provide a convenient sales system to the seller.

### Embodiment 2

Fig. 9 is an example of a screen to be displayed on the client of the embodiment 2. The difference from the example in Fig. 5 is that the commodity catalog screen 100 is partitioned into a plurality of commodity shelves 111a - 111f. By partitioning into a plurality of areas in this way, commodities can be provided to users just like commodity display shelves in an actual store. Each area 111a - 111f corresponds to unique commodities A - F. For example, the commodity A can be displayed only in the area 111a. The number of icons is not limited if the icon is in the corresponding area. The number of items to be sold can be limited as the case of the embodiment 1.

In Fig. 9, "sold out" is displayed when the commodities are sold out, that is, when all the commodity icons have been moved. For this, the client computer monitors the number of icons and/or the number of commodities, and displays "sold out" in the area of this commodity when the number of remaining commodities becomes zero. Or a sold out icon may be masked at the very bottom layer of the plurality of commodity icons. In this case, the sold out icon automatically appears when the last icon is moved.

In Fig. 9, the attributes of the commodity are also displayed in the area 111. For example, such attributes as the commodity name and discount rate can be displayed other than bargain.

### Embodiment 3

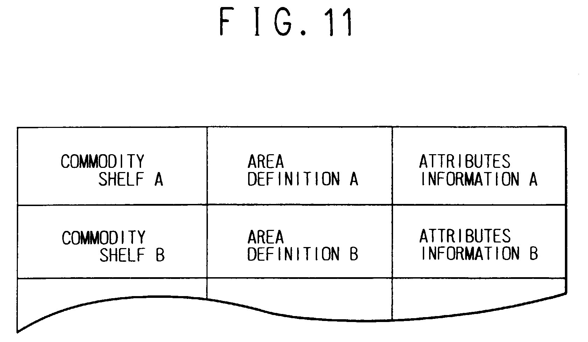

Fig. 10 is an example of a screen to be displayed on the client of the embodiment 3. The commodity catalog screen 100 is partitioned into a plurality of commodity shelves 111a - 111f, which is similar to the example in Fig. 9, but the commodity icons are not displayed on the screen 100, which is different from the example in Fig. 9. In the area 111, the image, name, price and other information on each commodity are displayed. In this example, each area corresponds to a commodity icon, and the user sets the commodity in the shopping basket area 104 by moving the cursor to a corresponding area and clicking on it or by performing a drag and drop operation. In this example, processing can be executed without using icons, and an operation similar to one used for an actual commodity catalog is possible. The client computer judges the commodity which the user specified by judging the positional relationship between each area 111 on the screen and the cursor. The internal structure of the area is, for example, the one shown in Fig. 11, and each area contains the type of commodity shelf, the definition of the area and the attributes information.

Fig. 8 is a flow chart depicting the operation of the electronic commerce system of the embodiment 3. Based on this flow chart, the processing of shopping will be described.

When the screen in Fig. 10 is displayed, the user moves the cursor to the area of the desired commodity area (S20). The user reads the attributes information on the commodity by clicking the area or by a drag and drop operation (S21). The image or icon of the commodity is displayed in the shopping basket area (S22).

The subtotal and the total amount are calculated based on the attributes information which was read (S23). When shopping is finished, (account button 110 is pressed), accounting processing is executed (S24). Otherwise, processing returns to the first step. The accounting processing includes prohibiting the movement of the commodity icons in order to determine the commodities, calculating the number of items, the subtotal and the total, and sending this determined information to the server.

According to the system of this embodiment, a commodity is represented by an area, so the user can operate easily by clicking. In this embodiment as well, attributes information are added, so the stock and the price of the commodity can be freely set. In other words, this system can provide an interface which the user can easily use, and provide a convenient sales system to the seller.

The present invention is not limited to the above embodiments, and can be modified within the scope of the invention stated in the Claims, and needless to say, these variant forms are included in the scope of the present invention.

In this description, "means" does not always refer to a physical means, but includes cases when the functions of a means are implemented by software. Also, the functions of one means may be implemented by two or more physical means, or the functions of two or more means may be implemented by one physical means.

## Claims

1. An electronic commerce method comprising steps of:
accessing a server to obtain commodity information;
selecting a commodity based on said obtained commodity information;
sending information on the selected commodity to said server; and,
confirming accounting data from said server, wherein said step of selecting a commodity further comprises steps of:
generating a commodity catalog screen for displaying the commodity information from said server;
generating a shopping basket screen which is independent from said commodity catalog screen and maintains the shopping status even if said commodity catalog screen is replaced with another commodity catalog screen;
copying or moving a commodity icon displayed on said commodity catalog screen to said shopping basket screen;
reading attributes information on the copied or moved commodity icon to said shopping basket screen;
tabulating the attributes information on the commodity icons existing on said shopping basket screen; and,
transferring the tabulated attributes information to the step of sending information on the selected commodity to said server.

2. A client computer for electronic commerce which accesses a server to obtain commodity information, selects a commodity based on said obtained commodity information, and sends the information on the selected commodity to said server, comprising:
a commodity catalog screen generation portion for generating a commodity catalog screen for displaying commodity information from said server;
a commodity icon display portion for generating a commodity icon based on the commodity information from said server and displaying said commodity icon on said catalog screen;
a shopping basket screen generation portion, which operates independently from said commodity catalog screen, for generating a shopping basket screen which maintains the shopping status even if said commodity catalog screen is replaced with another commodity catalog screen; and
an accounting processing portion for reading the attributes information on a commodity icon copied or moved to said shopping basket screen and tabulating the attributes information on the commodity icons existing on said shopping basket screen, so that shopping can be executed by a drag and drop operation of the icons.

3. The client computer for electronic commerce according to Claim 2, wherein said commodity icon display portion displays the number of commodity icons according to the number of commodities to be sold.

4. The client computer for electronic commerce according to Claim 2, wherein said commodity icon display portion disposes an icon to indicate sold out at the very bottom layer of the commodity icons.

5. A client computer for electronic commerce which accesses a server to obtain commodity information, selects a commodity based on said obtained commodity information, and sends the information on the selected commodity to said server, comprising:
a commodity catalog screen generation portion for generating a commodity catalog screen for displaying commodity information from said server;
a commodity shelf display portion for partitioning said commodity catalog screen to define a plurality of areas, defining attributes information on commodities in said area based on the commodity information from said server for each one of said areas and displaying the commodity information;
a shopping basket screen generation portion ,which operates independently from said commodity catalog screen, for generating a shopping basket screen which maintains the shopping status even if said commodity catalog screen is replaced with another commodity catalog screen;
a commodity specification portion for specifying a commodity by a cursor moved to said area, and displaying the specified commodity on said shopping basket screen; and
an accounting processing portion, for reading the attributes information on the commodity displayed on said shopping basket screen, and tabulating the attributes information on the commodities existing on said shopping basket screen, so that shopping can be executed by clicking said area.

6. The client computer for electronic commerce according to Claim 5, wherein said attributes information contains at least the price information defined for each client.

7. The client computer for electronic commerce according to Claim 5, wherein said attributes information contains at least the sales amount information defined for each client.

8. A medium recording a program which generates a commodity catalog screen on a computer for displaying commodity information from a server, generates commodity icons based on the commodity information from said server, displays said commodity icons on said catalog screen, generates a shopping basket screen, which operates independently from said commodity catalog screen and maintains the shopping status even if said commodity catalog screen is replaced with another commodity catalog screen, reads the attributes information on a commodity icon copied or moved to said shopping basket screen, tabulates the attributes information on the commodity icons existing on said shopping basket screen, and executes shopping by a drag and drop operation of the icons.

9. A medium recording a program which generates a commodity catalog screen on a computer for displaying commodity information from a server, partitions said commodity catalog screen to define a plurality of areas, defines the attributes information on the commodities in said area based on the commodity information from said server for each one of said areas, displays the commodity information, generates a shopping basket screen which operates independently from said commodity catalog screen and maintains the shopping status even if said commodity catalog screen is replaced with another commodity catalog screen, specifies a commodity by a cursor moved to said area, displays the specified commodity on said shopping basket screen, reads the attributes information on the commodity displayed on said shopping basket screen, tabulates the attributes information on the commodities existing on said shopping basket screen, and executes shopping by clicking said area.

10. A computer program adapted to control a client computer to perform steps in an electronic commerce method, said steps including:
accessing a server to obtain commodity information;
generating a commodity catalog screen for displaying the commodity information;
generating a shopping basket screen displayed simultaneously with the catalog screen, but independently so that a shopping status is maintained if the commodity catalog screen is replaced with another commodity catalog screen, and placing on the shopping basket screen a commodity icon corresponding to a commodity item of the catalog screen selected by cursor control performed by a user of the client computer.
